# FASCICULE DE BREVET EUROPEEN

(11) **EP 4 241 189 B1**
(45) Date de publication et mention de la délivrance du brevet: **08.01.2025**
(21) Numéro de dépôt: 21806696.7
(22) Date de dépôt: 04.11.2021
(51) Int. Cl.: G06F 21/62

(54) **PROCÉDÉ DE MISE À JOUR AUTOMATIQUE DE DONNÉES D'UN UTILISATEUR**
VERFAHREN ZUR AUTOMATISCHEN AKTUALISIERUNG VON BENUTZERDATEN
METHOD FOR AUTOMATICALLY UPDATING USER DATA

(30) Priorité: 06.11.2020 FR 2011443
(43) Date de publication de la demande: 13.09.2023
(73) Titulaire: M-Itrust, 92100 Boulogne-Billancourt (FR)
(72) Inventeur: DRILHON, Xavier, 92210 Saint-Cloud (FR); IMBAUD, Marc, 92410 Ville d'Avray (FR); LACELLE, Benoît, 78630 Orgeval (FR)
(74) Mandataire: LLR
(86) Numéro de dépôt international: PCT/EP2021/080686
(87) Numéro de publication internationale: WO 2022/096602

(56) Documents cités:
- GB-A- 2 429 548
- US-A1- 2020 320 220

## Description

L'invention concerne le domaine de la transmission sécurisée de données personnelles et plus particulièrement la mise à jour automatique et sécurisée de ces données.

On connaît déjà dans l'état la technique, notamment d'après le document FR3091797 au nom de la demanderesse, un procédé et une plateforme de transmission sécurisée de données personnelles. La plateforme permet de récupérer auprès d'un fournisseur de données, par exemple un établissement bancaire, un service public en ligne ou une agence immobilière en ligne, un sous-ensemble de données pertinentes pour l'utilisateur d'un service en ligne, telles qu'un état civil, une adresse, un revenu ou une date de naissance, et de transmettre ce sous-ensemble au fournisseur du service en ligne, par exemple un opérateur téléphonique ou un établissement de crédit. Concrètement, lors de la première utilisation du service en ligne ou d'une inscription de l'utilisateur au service, le fournisseur de ce service, c'est-à-dire son opérateur et en particulier celui qui gère les données utiles au service, requiert la transmission de certaines données personnelles de l'utilisateur. Ce dernier, par l'intermédiaire de la plateforme, choisit alors un fournisseur de données éligible par rapport aux données requises par le service en ligne et dont il est client. Un module de la plateforme sélectionne une ou plusieurs données, voire plusieurs jeux de données, parmi un ensemble de données fournies par le fournisseur de données, de manière à ne retenir que celles qui sont requises par le service en ligne. L'utilisateur valide l'un ou l'ensemble des les jeux de données de manière à permettre la transmission des données sélectionnées.

Grâce à ce procédé et à la plateforme le mettant en oeuvre, l'utilisateur est assuré qu'aucune donnée personnelle non exigée par le service en ligne pour réaliser une transaction n'est transmise. Il s'agit de « minimiser » les données, en particulier au sens du règlement n°2016/679, dit « règlement général sur la protection des données » (RGPD). La plateforme intervient donc, pour l'utilisateur, comme un tiers de confiance. En outre, les données personnelles de l'utilisateur ne sont pas stockées sur la plateforme, ce qui participe à la protection de sa vie privée. Du point de vue du fournisseur du service en ligne, la plateforme permet par exemple d'assurer que l'utilisateur est une personne physique, qu'il respecte les critères liés notamment à l'âge ou au lieu de résidence du service en ligne. En outre, le fournisseur du service en ligne est garanti que les données transmises via la plateforme proviennent directement et sans modification d'un fournisseur de données éligible.

La plateforme et le procédé décrits dans FR3091797 permettent donc de transmettre des données personnelles de manière sélective, sécurisée, transparente et rapide, en particulier lors de la première utilisation ou de l'inscription à un service en ligne.

Cependant, ultérieurement, à la demande de l'utilisateur ou du fournisseur du service en ligne, il peut être nécessaire de vérifier que les données de l'utilisateur sont à jour. A titre d'exemple, un utilisateur qui a déménagé n'a plus les mêmes données de domicile. De même, un service en ligne peut exiger une vérification régulière et le cas échéant une mise à jour des données de l'utilisateur. Cette exigence peut être liée à une obligation légale, par exemple pour une banque qui aurait une obligation de connaissance de son client et devrait à ce titre disposer régulièrement d'un justificatif de domicile récent de ce client. Ainsi, même quand une situation de l'utilisateur n'a pas été modifiée, il peut être nécessaire de transmettre régulièrement des données, au moins pour justifier sa situation. Il s'agit donc, ultérieurement à la première utilisation ou à l'inscription, de réitérer la transmission de données entre les mêmes entités.

Or, il est inconfortable pour l'utilisateur de devoir réitérer le même processus à intervalle régulier, surtout quand il s'agit de fournir à nouveau les mêmes données ou des justificatifs plus récents des mêmes données. Un risque est également d'oublier ou de renoncer à mettre à jour les données requises. Du point de vue du service en ligne, il est inconfortable de devoir solliciter régulièrement l'utilisateur et de gérer la mise à jour des données. Un risque est également de perdre le client qui renoncerait, par inconfort ou oubli, à transmettre régulièrement les données exigées.

Le document GB 2 429 548 décrit la mise à jour des données personnelles d'un utilisateur dans tous les autres fournisseurs de service auxquels l'utilisateur a permis de recevoir les données en se basant sur l'utilisation d'un indicateur dans les données enregistrées dans l'un des fournisseurs de service.Le document US 2020/320220 divulgue la mise à jour des données personnelles d'un utilisateur entre les fournisseurs de services réalisée à l'aide d'une chaîne de blocs (blockchain) et la vérification de la signature numérique d'un utilisateur.

L'invention a notamment pour but de faciliter la mise à jour de données d'un utilisateur d'un service en ligne entre un fournisseur de données et le fournisseur du service en ligne.

A cet effet, l'invention a pour objet un procédé de mise à jour de données personnelles d'un utilisateur d'un service en ligne, entre au moins un fournisseur de données et un fournisseur du service en ligne, dans lequel, au préalable, on fournit, au fournisseur du service en ligne, au moins une donnée pertinente pour l'utilisateur du service en ligne, le procédé étant caractérisé en ce que, ultérieurement, on met en oeuvre les étapes suivantes :
- on accède, auprès du fournisseur du service en ligne, à la donnée pertinente pour l'utilisateur du service en ligne fournie préalablement ;
- on accède, auprès du fournisseur de données, à au moins une donnée de référence de l'utilisateur ;
- on compare la donnée pertinente fournie préalablement à la donnée de référence ;
- si la donnée pertinente fournie préalablement est identique à la donnée de référence, on fournit automatiquement au fournisseur du service en ligne au moins une donnée complémentaire de l'utilisateur, issue du fournisseur de données.

Ainsi, on vérifie l'identité entre la donnée pertinente de l'utilisateur que stocke le fournisseur du service en ligne, en particulier une donnée qui a été préalablement à ce fournisseur, et la donnée correspondante, de référence, que stocke le fournisseur de données. On parlera dans la suite « d'identité » pour désigner cette identité entre la donnée pertinente et la donnée de référence. La donnée dite « de référence » que stocke le fournisseur de données est, par nature, a priori à jour, c'est-à-dire la plus récente possible et correspondant à la situation actuelle de l'utilisateur. A l'inverse, la donnée dite « pertinente », « à vérifier » ou encore « pertinente à vérifier », qui a été transmise préalablement, par exemple lors de l'inscription au fournisseur de service en ligne et éventuellement via le même fournisseur de données, n'est peut-être plus à jour depuis cette fourniture préalable. La vérification de l'identité permet de le déterminer. S'il y a identité, c'est qu'au niveau de cette donnée pertinente fournie préalablement, la situation de l'utilisateur n'a pas changé depuis que cette donnée a été transmise au service en ligne. On envoie alors automatiquement, c'est-à-dire sans requérir d'action de la part de l'utilisateur, une donnée complémentaire de cet utilisateur.

Par donnée « pertinente », terme qu'on pourrait remplacer par « appropriée » ou « adaptée », on désigne toute donnée qui est en lien avec l'utilisateur et le service en ligne, en particulier toute donnée qui est demandée par le service en ligne auprès de l'utilisateur, que ce soit de façon obligatoire ou optionnelle. On l'appellera indifféremment par la suite « donnée à vérifier » ou « donnée pertinente à vérifier », car dans le cadre de la description qui suit, cette donnée fournie au préalable, par exemple lors d'une première utilisation, est la donnée qui est amenée à être « vérifiée » pour déterminer si elle est toujours à jour.

Par « donnée de référence », on désigne toute donnée qui va être comparée avec la donnée à vérifier (la donnée pertinente) de manière à déterminer si elles sont identiques ou non. Or, par construction, on considère que la donnée de référence est la donnée pertinente « à jour ». Ainsi, si la donnée pertinente fournie préalablement au fournisseur du service est identique à cette donnée de référence, cela signifie que la donnée pertinente est à jour, on envoie la donc la donnée complémentaire au fournisseur du service en ligne. Sinon, cela signifie que depuis que la donnée pertinente a été fournie préalablement au fournisseur de service en ligne, une évolution la rend obsolète ou incorrecte.

Par donnée « complémentaire », on désigne une donnée complémentaire à la donnée de référence (et donc à la donnée pertinente à vérifier également, en cas d'identité) de l'utilisateur, permettant de compléter, à l'égard du fournisseur de service, la donnée pertinente de l'utilisateur qui a été auparavant identifiée comme étant identique à la donnée de référence. En d'autres termes, une fois l'identité vérifiée, on fournit au fournisseur de service en ligne une donnée supplémentaire de l'utilisateur qui vient compléter la donnée pertinente. Il s'agit en particulier, mais pas nécessairement, d'une donnée dont le caractère sensible ou confidentiel est dépendant de celui de la donnée pertinente. Par exemple, si la donnée pertinente à vérifier comprend le nom d'un utilisateur et son numéro de contrat auprès du fournisseur de service en ligne, la donnée complémentaire peut être son adresse postale, qui est alors fournie au fournisseur de service une fois que le nom et le numéro de contrats de l'utilisateur sont vérifiés.

Ce procédé permet donc de vérifier si la donnée pertinente de l'utilisateur, qui avait été fournie au préalable au fournisseur du service en ligne et qui est récupérée auprès de ce même fournisseur pour la comparer, est toujours « valable », « valide », ou « à jour », et si tel est le cas, de la compléter de manière automatique sans que l'utilisateur n'ait à agir. En d'autres termes, le procédé évite à l'utilisateur d'une part de devoir vérifier régulièrement que ses données pertinentes sont à jour et d'autre part de procéder à des actions pour fournir une ou des données complémentaires qu'il aurait de toute manière fournies avec sa donnée pertinente à jour. Du côté du fournisseur de service, la vérification est immédiate, automatique et évite donc de solliciter l'utilisateur. Le fait d'obtenir automatiquement la donnée complémentaire en cas d'identité permet également au fournisseur du service en ligne de se mettre en conformité avec d'éventuelles obligations légales.

Avantageusement, la donnée pertinente fournie préalablement au fournisseur du service en ligne est une donnée à caractère personnel de l'utilisateur, telle qu'une adresse de domicile ou une donnée bancaire, la donnée complémentaire étant une donnée de justification, telle qu'un justificatif de domicile ou un relevé d'identité bancaire, permettant de justifier la validité actuelle de la donnée pertinente à caractère personnel fournie préalablement.

Il peut en particulier s'agir de données dites « à caractère personnel » conformément au « Règlement général sur la protection des données », ou règlement UE2016/679 du Parlement européen et du Conseil du 27 avril 2016. Comme le procédé de l'invention permet de comparer une donnée pertinente obtenue auprès du fournisseur du service en ligne et une donnée de référence obtenue auprès du fournisseur de données, il n'est pas nécessaire de stocker ces données ailleurs, et l'utilisateur garde donc le contrôle sur les entités stockant ses données.

De préférence, la donnée pertinente fournie préalablement au fournisseur du service en ligne est une donnée requise préalablement par le fournisseur du service en ligne lors d'une inscription de l'utilisateur au service ou lors d'un premier usage du service par l'utilisateur.

Ainsi, lors de l'inscription ou de la première utilisation du service, ce dernier requiert la donnée pertinente. Il peut par exemple s'agir de l'obligation légale de fournir une donnée bancaire pour utiliser un service de paiement. Le procédé permet donc de vérifier ultérieurement, automatiquement, si la donnée fournie lors de cette première utilisation ou inscription est toujours à jour, et si c'est le cas d'envoyer une donnée complémentaire.

De préférence, la donnée complémentaire, fournie au fournisseur du service en ligne à l'issue de la comparaison, remplace une donnée complémentaire antérieure.

Ainsi, une fois que la validité de la donnée pertinente est vérifiée, le procédé permet de mettre à jour la donnée complémentaire. En d'autres termes, en cas d'identité entre la donnée de référence et la donnée à vérifier, on ne modifie pas cette dernière, mais on remplace la donnée complémentaire par une nouvelle donnée complémentaire. En d'autres termes, la vérification de la donnée pertinente permet de mettre à jour la donnée complémentaire. Par exemple, si le nom et le numéro de contrats de l'utilisateur, qui forment une donnée pertinente, sont vérifiés, alors on envoie l'adresse de l'utilisateur, qui vient remplacer l'ancienne adresse stockée au sein du fournisseur de service. On a donc mis à jour automatiquement son adresse.

Avantageusement, la donnée complémentaire est une donnée certifiante certifiant, auprès du fournisseur du service en ligne, la constatation d'identité entre la donnée pertinente fournie préalablement et la donnée de référence.

Ainsi, la donnée certifiante permet de justifier l'identité auprès du service en ligne. Par exemple, si la donnée pertinente à vérifier est une adresse de l'utilisateur, et que l'identité entre cette donnée et la donnée de référence stockée par le fournisseur de données est vérifiée, la donnée certifiante fournie au service en ligne peut être une copie d'un justificatif de domicile récent de l'utilisateur, ce qui permet au service en ligne de s'assurer de la pertinence de la donnée et d'être en conformité avec une éventuelle obligation légale.

De préférence, pour comparer la donnée pertinente à la donnée de référence, on compare un hachage de la donnée pertinente à un hachage de la donnée de référence.

Ainsi, on ne compare pas les données « en clair », de sorte que la comparaison est sécurisée et les données confidentielles.

De préférence, lors de l'étape de fourniture préalable de la donnée pertinente au fournisseur du service en ligne, on fournit également le hachage de la donnée pertinente au fournisseur du service en ligne, et, lors de l'étape d'accession à la donnée pertinente auprès du fournisseur du service en ligne, on accède uniquement au hachage de la donnée pertinente.

Ainsi, lors de la mise à jour, c'est-à-dire de la vérification de la donnée pertinente à vérifier, on accède uniquement à la donnée pertinente « hachée ». L'ensemble du procédé de mise à jour fonctionne donc sans qu'il ne soit nécessaire d'accéder à la donnée pertinente « en clair ».

Avantageusement, si la donnée pertinente fournie préalablement et la donnée de référence ne sont pas identiques, on transmet à l'utilisateur une demande de mise à jour de la donnée à vérifier.

Ainsi, en cas de non-identité, on demande à l'utilisateur de remplacer la donnée pertinente à vérifier par une nouvelle donnée, à jour. En d'autres termes, la mise à jour automatique n'a lieu qu'en ce qui concerne la donnée complémentaire, et uniquement en cas d'identité vérifiée. Cela permet de laisser à l'utilisateur la libre gestion de ses données personnelles pertinentes.

De préférence, on met en oeuvre les étapes suivantes :
- au préalable des étapes évoquées en premier lieu, parmi plusieurs données complémentaires et plusieurs données de référence, on associe au moins l'une des données complémentaires à au moins l'une des données de référence ;
- si, à l'issue de la comparaison entre la donnée pertinente fournie préalablement et au moins l'une des données de référence, la ou l'une de ces données de référence est identique à la donnée pertinente, la donnée complémentaire fournie au fournisseur du service en ligne est la ou au moins l'une des données complémentaires associées au préalable à cette donnée de référence.

Ainsi, on forme des associations entre des données de référence et une ou plusieurs données complémentaires, de manière à fournir au service en ligne la donnée complémentaire correspondante à la donnée de référence dont l'identité à la donnée pertinente à vérifier a été vérifiée.

Avantageusement, au préalable des étapes évoquées en premier lieu, on prédéfinit des types de données d'utilisateur de façon à ce qu'une donnée issue d'un type soit considérée comme une donnée pertinente ou une donnée de référence et une donnée issue d'un autre type soit considérée comme une donnée complémentaire.

Ainsi, on peut configurer à quelles catégories les données seront associées. Ces catégories peuvent varier selon les utilisations et les acteurs concernés.

De préférence, on met en oeuvre les étapes suivantes :
- lors de l'étape de fourniture préalable de la donnée pertinente au fournisseur du service en ligne, on fournit au fournisseur du service en ligne au moins un jeton de mise à jour chiffré, le jeton étant tel qu'une fois déchiffré il permet d'accéder, auprès du fournisseur de données, à la donnée de référence de l'utilisateur ; puis
- pour réaliser l'étape d'accession à la donnée de référence selon les étapes évoquées en premier lieu :
   - on récupère le jeton de mise à jour chiffré auprès du fournisseur du service en ligne, et, on déchiffre le jeton indépendamment du fournisseur du service en ligne ;
   - on accède à la donnée de référence de l'utilisateur, auprès du fournisseur de données, au moyen du jeton déchiffré.

Ainsi, le jeton de mise à jour peut être fourni au fournisseur du service en ligne lors de l'une première transmission d'une donnée de l'utilisateur entre le fournisseur de de données, afin de rejouer ultérieurement cette transmission pour mettre à jour cette donnée. Le jeton est chiffré avant d'être fourni au fournisseur du service en ligne, lequel n'a pas accès aux moyens de déchiffrement du jeton. Ceux-ci sont en particulier accessibles à une plateforme de transmission indépendante, qui met en oeuvre le procédé, cette plateforme ne stockant pas le jeton ni les données transmises au préalable. Cette manière de séparer le jeton chiffré des moyens de son déchiffrement permet d'assurer la sécurité des données de l'utilisateur. Lorsque la mise à jour du procédé a lieu, le jeton est mis à disposition par le fournisseur du service en ligne mais déchiffré indépendamment de ce dernier. Il est en particulier mis à disposition auprès de la plateforme pourvue des moyens de déchiffrement. Une fois déchiffré, le jeton permet d'accéder au fournisseur de données concerné et de vérifier l'identité entre la donnée à pertinente et la donnée de référence.

Avantageusement, on met en oeuvre les étapes suivantes :
- au préalable de l'étape de fourniture du jeton de mise à jour chiffré au fournisseur du service en ligne selon la revendication précédente, on conçoit le jeton de mise à jour chiffré au moyen des étapes suivantes :
   - on chiffre un identifiant du fournisseur de données et un identifiant de l'utilisateur auprès du fournisseur de données ;
   - on réalise le hachage de la donnée pertinente de l'utilisateur ;
   - au sein d'un serveur web, on regroupe l'identifiant chiffré du fournisseur du données, l'identifiant chiffré de l'utilisateur auprès du fournisseur de données, et le hachage de la donnée pertinente de l'utilisateur, de façon à former le jeton de mise à jour comprenant les identifiants et le hachage ; et
   - au sein du serveur web, on chiffre le jeton de mise à jour ;
- pour réaliser l'étape d'accession à la donnée de référence de l'utilisateur comme préalablement exposée, on déchiffre, indépendamment du fournisseur du service en ligne, le jeton de mise à jour et les identifiants ;
- on réalise le hachage de la donnée de référence ;
- on réalise l'étape de comparaison préalablement exposée entre le hachage de la donnée de référence et le hachage de la donnée pertinente.

Ainsi, on conçoit le jeton de mise à jour au moyen d'un double chiffrement : celui des identifiants qu'il contient, et celui du jeton lui-même. Cela améliore encore la sécurité des données de l'utilisateur.

De préférence, on accède à la donnée complémentaire, auprès du fournisseur de données, également au moyen du jeton de mise à jour déchiffré.

Avantageusement, le jeton a une durée de validité prédéterminée.

Ainsi, la mise à jour automatique telle que décrite n'est possible que pendant cette durée, le jeton n'étant plus utilisable à l'issue de sa durée de validité. Cette durée peut être paramétrée par le fournisseur du service en ligne. Alternativement, l'utilisateur peut la régler, par exemple au moment où il décide de rendre réalisable ce procédé de mise à jour, en particulier lors de son inscription ou sa première souscription au service en ligne. Dans les deux cas, l'utilisateur donne donc son consentement à la mise à jour automatique de ses données pour une durée limitée.

On prévoit également selon l'invention un programme d'ordinateur comprenant des instructions qui, lorsque le programme est exécuté par un ordinateur, conduisent celui-ci à mettre en oeuvre le procédé précédemment exposé.

On prévoit également selon l'invention un support de données lisibles par ordinateur, sur lequel est enregistré le programme d'ordinateur mentionné ci-avant.

On prévoit également selon l'invention un dispositif de traitement de données comprenant des moyens de mise en oeuvre du procédé précédemment décrit.

Enfin, on prévoit également selon l'invention une plateforme de transmission sécurisée de données personnelles d'un utilisateur d'un service en ligne, entre au moins un fournisseur de données et un fournisseur du service en ligne, caractérisée en ce qu'elle comprend :
- un module d'accès, auprès du fournisseur du service en ligne, à au moins une donnée pertinente pour l'utilisateur du service en ligne, fournie préalablement au fournisseur du service en ligne ;
- un module d'accès à au moins une donnée de référence de l'utilisateur auprès du fournisseur de données ;
- un module de comparaison entre la donnée pertinente et la donnée de référence de manière à déterminer si elles sont identiques ;
- un module de fourniture au fournisseur du service en ligne d'au moins une donnée complémentaire, issue du fournisseur de données, certifiant la constatation d'identité entre la donnée pertinente et la donnée de référence.

De préférence, la plateforme comprend en outre :
- un module de chiffrement pour chiffrer un identifiant à fournir au fournisseur du service en ligne ;
- un module de déchiffrement pour déchiffrer l'identifiant indépendamment du fournisseur du service en ligne.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une représentation schématique d'une plateforme digitale selon un mode de réalisation de l'invention ; et
[Fig. 2] la figure 2 est un logigramme représentant les étapes d'un procédé selon un mode de mise en oeuvre de l'invention.

### Description détaillée

Dans toute la suite, même si ce n'est pas précisé, on suppose que différents moyens informatiques mettent en oeuvre le procédé de l'invention (terminaux, dispositifs, serveurs, base de données, etc.) et communiquent entre eux lorsque cela est nécessaire sur un ou plusieurs réseaux de télécommunication tels qu'Internet et ce par tout moyen connu de l'homme du métier. On se référera à l'un ou l'ensemble de ces moyens de manière générale par l'expression « moyens informatiques » ou « moyens ». Par ailleurs, tous ces éléments sont aptes, au moyen de composants techniques conventionnels et connus de l'homme du métier, à commander et/ou mettre en oeuvre les opérations qui les concernent dans ce qui suit lorsqu'un programme d'ordinateur adapté est mis en oeuvre dans ces éléments, notamment au moyen de processeurs et/ou mémoires.

Nous décrivons tout d'abord sommairement les étapes de transmission préalable de données personnelles d'un utilisateur entre un fournisseur de donnée et un fournisseur de service, via une plateforme numérique de sélection et de transmission de données sécurisée. On parle indifféremment dans toute la demande de « première utilisation du service », de « souscription au service » ou « d'inscription au service », ce qui revient dans tous les cas à traiter de la première transmission de données particulières au fournisseur du service.

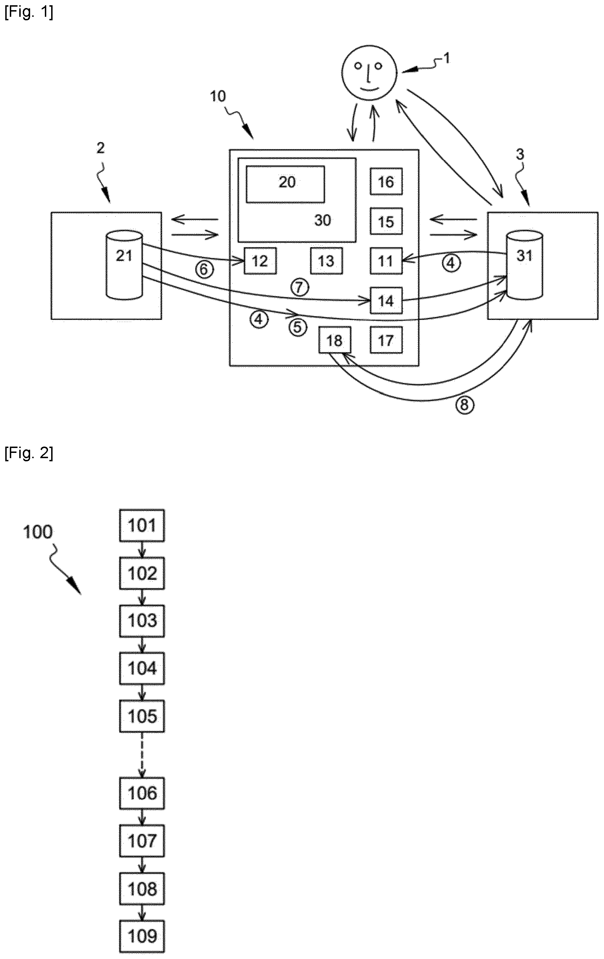

La plateforme de données 10 est une plateforme numérique, implémentée par un programme 20, installé sur un ou des serveurs 30 mettant en oeuvre le procédé décrit par la suite. Elle est illustrée sommairement à la figure 1, où sont résumées sous la forme de flèches certaines de ses principales interactions avec un fournisseur de données 2, un fournisseur de service 3 et l'utilisateur 1. En effet, La plateforme 10 sert de tiers de confiance entre l'utilisateur 1, le fournisseur de données 2 et le fournisseur de service 3, pour la transmission de données de l'utilisateur 1 entre le fournisseur de données 2 et le fournisseur de service 3, en vue de l'utilisation du service par l'utilisateur 1. Dans ce qui suit, on prend comme exemple de donnée pertinente à vérifier 4 une adresse de domicile de l'utilisateur 1, comme exemple de fournisseur de donnée 2 une agence immobilière et comme exemple de fournisseur de service 3 un fournisseur d'énergie.

Lors de la souscription en ligne de l'utilisateur 1 au fournisseur d'énergie 3, ce dernier requiert l'obtention de l'adresse 4 de domicile de l'utilisateur. Grâce à la plateforme 10 auquel l'utilisateur 1 se connecte, cette adresse est trouvée par la plateforme au sein des données rendues accessibles par l'agence immobilière 2 et sa base de données 21, et transmise par la plateforme 10, mais sans être stockée par elle, au fournisseur d'énergie 3 et à sa base de données 31. Cette adresse est la donnée pertinente 4 de l'utilisateur 1. Elle est « pertinente » en ce qu'elle est nécessaire pour que l'utilisateur puisse accéder au service. En variante, une telle donnée pertinente pourrait être optionnelle.

En plus de la fourniture de cette donnée pertinente 4, la plateforme 10 obtient du fournisseur de donnée 2 la transmission d'une donnée complémentaire 5, en l'espèce un justificatif de domicile qui mentionne l'adresse de l'utilisateur ainsi qu'une date. Elle est transmise, là encore sans être stockée par la plateforme 10, au fournisseur d'énergie 3 et associée à l'adresse 4 au sein des serveurs du fournisseur d'énergie 3, en particulier au sein de la base de données 31, le terme « associée » signifiant qu'il est possible ultérieurement de retrouver l'une lorsque l'on obtient l'autre. Ainsi, le fournisseur d'énergie 3 stocke dans sa base 31 l'adresse 4 de domicile de l'utilisateur 1, ainsi que le justificatif 5 de domicile daté du jour de son obtention et associe l'une à l'autre au sein de la base 31, indépendamment de la plateforme 10 sur laquelle ces données ne sont pas stockées.

Les détails concernant la sélection et la transmission de ces données 4 et 5 via la plateforme 10 ne font pas particulièrement l'objet de la présente description, qui vise spécifiquement la vérification et mise à jour de ces données. On note qu'une manière de procéder compatible avec le procédé de mise à jour décrit plus bas est décrite dans la demande FR3091797. Cependant, d'autres procédés et plateformes de transmission sécurisée de données personnelles sont compatibles avec le procédé décrit ci-après.

En effet, la présente description concerne plus spécifiquement la vérification ultérieure de la validité de la donnée 4, en l'espèce l'adresse de domicile de l'utilisateur 1. En particulier, le fournisseur d'énergie 3 peut avoir l'obligation, ou le souhait, de vérifier si l'adresse de l'utilisateur 1 est toujours la même, par exemple quelques mois après sa première transmission décrite plus haut. Ce procédé de vérification et de mise à jour est également réalisé par la plateforme 10.

Pour ce faire, la plateforme 10 comprend un module d'accès 11, permettant d'accéder, auprès du fournisseur d'énergie 3, à au moins une donnée à vérifier pertinente pour l'utilisateur 1, en l'espèce à l'adresse de domicile 4 au sein de la base 31.

Elle comprend également un module d'accès 12 à au moins une donnée de référence 6 de l'utilisateur auprès du fournisseur de données, en l'espèce l'agence immobilière 2 au sein de la base 21. La donnée de référence 6 est l'adresse de domicile de l'utilisateur 1, qui peut avoir changé depuis sa transmission évoquée plus haut. Ainsi, l'adresse 6 actuelle du domicile, stockée par l'agence immobilière 2, peut être différente de l'adresse 4 fournie auparavant. Au contraire, si l'utilisateur 1 n'a pas déménagé, elles sont identiques.

La plateforme 10 comprend également un module de comparaison 13 entre la donnée à vérifier 4 et la donnée de référence 6 de manière à déterminer si elles sont identiques. Comme décrit plus bas, cette comparaison se fait indirectement, par une comparaison entre des hachages de chacune des données. Cela permet de ne pas exposer les données et de ne traiter que leurs hachages. Bien entendu, on pourrait en alternative envisager une comparaison directe.

La plateforme 10 comprend également un module de fourniture 14 au fournisseur du service en ligne 3 d'au moins une donnée complémentaire 7, en l'espèce le justificatif de domicile 7 récent issu du fournisseur de données 2. En l'espèce, cette donnée complémentaire 7 est une donnée qu'on peut qualifier de « certifiante », car elle permet de certifier auprès du fournisseur de service 3 la constatation d'identité entre la donnée à vérifier 4 et la donnée de référence 6, avec une date récente. Ainsi, le justificatif de domicile 7, issu de l'agence immobilière 2, est transmis de manière à remplacer l'ancien justificatif 5 de domicile qui ne serait plus valable aux yeux du fournisseur d'énergie 3.

La plateforme comprend un module de chiffrement 15 pour chiffrer un identifiant à fournir au fournisseur du service en ligne 3 et un module de déchiffrement 16 pour déchiffrer l'identifiant indépendamment du fournisseur du service en ligne 3.

La plateforme comprend un module de hachage 17 apte à réaliser un hachage d'une donnée, en particulier de la donnée 4 à vérifier et de la donnée 6 de référence, à partir d'une fonction de hachage conventionnelle.

Enfin, la plateforme 10 comprend un module 18 de conception d'un jeton de mise à jour visant à regrouper des identifiants chiffrés et un hachage de la donnée de référence 4, jeton destiné à être lui aussi chiffré et à être transmis au fournisseur du service en ligne 3 en attendant de le requérir en vue d'une vérification et d'une éventuelle mise à jour, comme décrit plus bas. A la place de « jeton de mise à jour », on pourrait parler de « jeton d'auto-update » ou de « auto-update token ».

On va maintenant décrire en détails le procédé 100 de vérification et de mise à jour mise en oeuvre par cette plateforme 10 au moyen des modules évoqués. Ce procédé 100 est illustré à la figure 2.

Le procédé 100 comprend des étapes 101 à 109 visant à vérifier si l'adresse de domicile 4 de l'utilisateur 1 stockée par le fournisseur d'énergie 3 est toujours valide, et, si tel est le cas, à fournir une donnée complémentaire complétant cette adresse, en l'espèce un justificatif de domicile 7 certifiant la validité de l'adresse, c'est-à-dire récent. Ce justificatif 7 vient le cas échéant remplacer dans la base de données 31 du fournisseur 3 du service en ligne le justificatif 5 devenu caduque. Ce procédé peut être mis en oeuvre sur demande ou de façon automatique et par exemple à intervalle régulier de façon préprogrammée.

Les étapes 101 à 106 sont mises en oeuvre en amont de la mise à jour à proprement parler.

A l'étape 101, on prédéfinit des types de données d'utilisateur de façon à ce qu'une donnée issue d'un type soit considérée comme une « donnée à vérifier » ou une « donnée de référence » et une donnée issue d'un autre type soit considérée comme une « donnée complémentaire ». Ainsi, pour l'utilisation décrite, on prédéfinit d'une part les données de type « adresse de domicile » pour qu'elles soient considérées comme des « données à vérifier » si elles sont stockées par le fournisseur 3 du service en ligne ou « données de référence » si elles sont stockées par le fournisseur de données 2, et d'autre part les données de type «justificatif de domicile » pour qu'elles soient considérées comme des données complémentaires, que ce soit au sein du fournisseur de données 2 ou au sein du fournisseur de service 3, en particulier des données certifiantes associées aux données correspondantes d'adresse de domicile. De cette manière, chaque donnée considérée dans le procédé est automatiquement classée par les moyens informatiques soit comme une donnée à vérifier, soit comme une donnée de référence, soit comme une donnée complémentaire. Cette prédéfinition des données peut être effectuée manuellement par un opérateur, via une interface logicielle par exemple. Elle peut être propre à chaque application du procédé décrit. Ainsi, elle peut être effectuée par un représentant du fournisseur du service 3 de manière à adapter ce procédé aux données pertinentes et aux données certifiantes exigées par le service.

De cette manière, à l'étape 102, parmi plusieurs données complémentaires et plusieurs données de référence, les moyens associent au moins l'une de ces données complémentaires à au moins l'une des données de référence ou donnée à vérifier. Ainsi, lorsque l'adresse 4 est transmise la première fois au fournisseur de service en ligne 3 comme décrit plus haut lors de la souscription au service, elle est automatiquement considérée par les moyens informatiques mettant en oeuvre l'invention comme une « donnée à vérifier » en vue de la mise à jour, tandis que le justificatif 5 transmis dans le même temps et associé à cette adresse est automatiquement considérée comme une donnée complémentaire de cette adresse 4 de domicile au sein de la base de données 31. La nuance est importante dans la mesure où, comme on le verra plus bas, c'est la donnée à vérifier 4 qui sera vérifiée, et qui reste inchangée en cas d'identité avec la donnée de référence 6, tandis que la donnée complémentaire 5 est remplacée au sein des bases 31 du fournisseur de service en ligne 3 lorsque l'identité est vérifiée.

L'étape 103 est mise en oeuvre simultanément à cette première transmission, ou juste après. Elle est ainsi déclenchée par l'utilisateur 1 qui décide, tout en étant à l'initiative de cette première transmission, d'indiquer qu'il souhaite que soient effectuées les étapes de vérification et mise à jour automatique décrites par la suite. Si un tel choix est signalé, par exemple via une interface logicielle, alors, les moyens informatiques conçoivent un jeton de mise à jour.

Pour ce faire, on chiffre, au moyen du module de chiffrement 15 de la plateforme 10, un identifiant du fournisseur de données 2 qui permet de retrouver, une fois déchiffré, quel fournisseur de données est concerné, en l'espèce l'agence immobilière 2. Parallèlement, au moyen du même module 15, on chiffre un identifiant de l'utilisateur 1 auprès du fournisseur du service de données 2, qui permet de retrouver, une fois déchiffré, la donnée à de référence 6 concernant l'utilisateur 1 stockée par l'agence 2, c'est-à-dire l'adresse de domicile actuelle de l'utilisateur 1, qui sera ensuite comparée à l'adresse 4 transmise. Ces chiffrements peuvent avoir lieu au niveau d'un navigateur web, mais aussi à un autre niveau, par exemple par l'utilisation d'une API (« *Application Programming Interface* ») ou d'une application web distincte. Par chiffrement, on désigne toute méthode de chiffrement connue de l'homme du métier, en particulier les méthodes de chiffrement asymétrique. Ainsi, en l'espèce, on utilise la partie publique d'une clé de chiffrement asymétrique pour chiffrer ces identifiants. La partie privée de la clé pour déchiffrer ces identifiants est stockée sur le serveur 30 associé à la plateforme 10.

Ensuite, au niveau du serveur web 30 associé à la plateforme 10, les moyens réalisent un hachage, via le module de hachage 17 de la donnée à vérifier 4 de l'utilisateur 1, au moyen d'une fonction de hachage connue de l'homme du métier et selon un procédé de hachage conventionnel et qui ne sera donc pas décrit ici.

Puis, au sein du serveur web 30, les moyens informatiques regroupent l'identifiant chiffré du fournisseur de données 2, l'identifiant chiffré de l'utilisateur auprès du fournisseur de données 2, et le hachage de la donnée à vérifier 4 de l'utilisateur, de façon à former le jeton de mise à jour 8 comprenant les deux identifiants et le hachage.

Les moyens informatiques ajoutent une durée de validité prédéterminée au jeton 8. Cette durée est définie par le fournisseur 3 du service en ligne, par exemple en fonction de ses obligations légales de l'usage qu'il veut faire du procédé, elle concerne la période durant laquelle les étapes de récupération et de comparaison de données décrites plus bas peuvent être mises en oeuvre automatiquement. Cette durée est indiquée à l'utilisateur au moment où il choisit de mettre en oeuvre ce procédé, c'est-à-dire lors de sa première souscription ou de son inscription. Elle correspond donc à la période pour laquelle l'utilisateur 1 consent par avance à ce que le procédé de vérification et mise à jour soit réalisé automatiquement. En variante, l'utilisateur pourrait configurer lui-même cette durée de validité.

Les moyens informatiques peuvent ajouter d'autres données au jeton si nécessaire, par exemple une ou plusieurs données d'horodatage (« timestamp »), un numéro de version, etc. En variante, il est possible de fournir d'autres données au sein du jeton 8 de mise à jour en plus de celles déjà mentionnées, en fonction de l'implémentation particulière du procédé choisie par l'homme du métier.

A l'étape 104, au sein du serveur web 30, les moyens chiffrent, au moyen du module de chiffrement 15, le jeton de mise à jour 8 au moyen d'une autre clé de chiffrement asymétrique. Là encore, la partie privée de la clé est stockée sur le serveur.

A l'étape 105, les moyens envoient le jeton de mise à jour 8 chiffré au fournisseur 3 du service en ligne, en l'espèce au fournisseur d'énergie, de façon à le stocker dans la base 31. Le jeton 8 n'est par ailleurs pas stocké sur le ou les serveurs web 30, ni sur aucun autre élément de la plateforme 10. Ainsi, le jeton est chiffré et stocké uniquement dans les bases de données du fournisseur 3 du service en ligne, lequel ne dispose pas des clés privées pour le déchiffrer et déchiffrer les identifiants. A l'inverse, les serveurs 30 associés à la plateforme 10 possèdent ces parties privées des clefs, mais ne possèdent pas de copie du jeton 8 de mise à jour. Cette séparation entre le jeton chiffré et les moyens de le déchiffrer assure la sécurité des données de l'utilisateur 1 qui y sont contenues.

Pour rappel, ces étapes 101 à 105 ont été effectuées simultanément ou juste après la transmission de la donnée pertinente 4 à au fournisseur de service en ligne, et ce sur indication de l'utilisateur 1. En d'autres termes, lors de la souscription au service, l'utilisateur 1 indique qu'il souhaite bénéficier de cette vérification/mise à jour ultérieure automatique, ce qui déclenche automatiquement la création et la transmission du jeton 8 conformément à ce qui a été décrit ci-dessus.

L'étape 106 correspondant au début de la mise à jour à proprement parler. Elle a ainsi lieu ultérieurement aux étapes précitées, par exemple quelques semaines ou quelques mois plus tard, sur demande ou de façon préprogrammée. Il s'agit de vérifier que la donnée pertinente à vérifier 4 est toujours valide, c'est-à-dire qu'elle correspond à une donnée de référence 6 qui se trouve stocké par le fournisseur de données 2, sur sa base 21, et qui est a priori à jour. Ainsi, en l'espèce, il s'agit de vérifier que l'adresse 4 fournie au fournisseur d'énergie 3 est toujours correcte et qu'elle correspond donc à l'adresse actuelle 6 connue de l'agence immobilière 2. Ainsi, à cette étape 106, les moyens informatiques requièrent au fournisseur du service en ligne 3 la transmission du jeton de mise à jour chiffré 8. Le jeton est alors rendu accessible par le fournisseur 3 auprès des serveurs 30 associés à la plateforme. Il est alors déchiffré grâce à la clé privée correspondante et au module de déchiffrement 16 de la plateforme 10, de manière à accéder à son contenu et en particulier à trois éléments : l'identifiant chiffré de l'agence immobilière 2, l'identifiant chiffré de l'utilisateur 1 auprès de l'agence 2, et le hachage de la valeur 4 à vérifier, en l'espèce l'adresse de domicile chiffrée transmise lors de la première inscription.

A l'étape 107, on opère une nouvelle opération de déchiffrement, mais via un module de déchiffrement distinct du module 16, et visant les identifiants chiffrés. Cette opération a lieu sur les serveurs 30, mais pourrait aussi être réalisée via une APl. On obtient alors les identifiants respectivement de l'agence 2 et de l'utilisateur auprès de cette agence 2. Il est à noter que toutes les opérations de déchiffrement ont lieu de manière indépendante du fournisseur du service en ligne 3, qui n'a donc pas accès au fournisseur de données directement. Seule la plateforme 10 et ses moyens permet d'assurer un échange entre ces deux entités.

Bien entendu, les étapes 106 et 107 ne peuvent être réalisées que si le jeton 8 est toujours valide, c'est-à-dire si la durée ou période de validité choisie par l'utilisateur 1 n'est pas arrivée à son terme. Si le jeton n'est plus valide, ces étapes et donc les étapes décrites ci-après ne peuvent avoir lieu, le procédé est arrêté. Il pourra alors être indiqué à l'utilisateur 1, par l'envoi d'un message automatique, que la période de vérification et mise à jour automatique de ses données est arrivée à son terme, et qu'il peut la renouveler s'il le désire.

Dans la suite, on considérera que le jeton est valide.

A l'étape 108, grâce aux identifiants déchiffrés et au module de hachage 17, les moyens obtiennent un hachage de la donnée de référence 6 stockée par le fournisseur de données 2.

A l'étape 109, le module de comparaison 13 compare le hachage de la donnée à vérifier 4 au hachage de la donnée de référence 6. On distingue alors deux cas en fonction du résultat de la comparaison.

Si la donnée 4, c'est-à-dire l'adresse du domicile de l'utilisateur 1, a été modifiée, alors le module indique que la donnée a changé. Dans ce cas, le procédé est stoppé. Toujours dans ce cas, dans une étape optionnelle finale, les moyens envoient automatiquement à l'utilisateur 1 une demande de mise à jour de sa donnée pertinente 4. En d'autres termes, le procédé a permis de déterminer automatiquement que l'utilisateur avait déménagé, on lui demande de fournir sa nouvelle adresse. Cette façon de procéder permet de laisser à l'utilisateur la libre gestion de ses données personnelles, seules les données complémentaires étant transmissibles automatiquement.

Dans l'autre cas, en revanche, si le module 13 confirme l'identité entre les données, cela signifie que l'adresse de domicile est toujours la même. Dans ce cas, et de manière automatique, les moyens obtiennent du fournisseur de données 2 la donnée complémentaire 7, en l'espèce le justificatif de domicile récent, associé à la donner de référence 6, et le transmettent au fournisseur du service en ligne 3 où il vient remplacer le précédent justificatif 5, c'est-à-dire la donnée complémentaire antérieure. L'obtention de cette donnée complémentaire est réalisée grâce aux mêmes identifiants que ceux évoqués précédemment et qui formaient une partie du contenu du jeton 8. Cette étape est donc la mise à jour de la donnée complémentaire, réalisée uniquement dans le cas où la validité de la donnée pertinente à vérifier 4 est assurée.

En variante, on pourrait prévoir que, en cas de non-identité, la nouvelle adresse 6, de manière plus générale la nouvelle donnée pertinente 6, est fournie automatiquement en remplacement de la précédente donnée 4 au sein de la base 31 du fournisseur de service 3.

Bien entendu, en cas de plusieurs données de référence disponibles associées à plusieurs données complémentaires, les moyens fournissent au fournisseur du service en ligne 3 la donnée complémentaire correspondant à la donnée de référence identique à la donnée à vérifier.

En résumé, le procédé décrit est un procédé de mise à jour de données personnelles d'un utilisateur 1 d'un service en ligne, entre au moins un fournisseur de données 2 et un fournisseur 3 du service en ligne, comprenant les étapes suivantes :
on accède, auprès du fournisseur du service en ligne 3, à au moins une donnée à vérifier pertinente 4 pour l'utilisateur 1 du service en ligne,
on accède, auprès du fournisseur de données 2, à au moins une donnée de référence 6 de l'utilisateur,
on compare la donnée à vérifier 4 à la donnée de référence 6 ;
si la donnée à vérifier 4 est identique à la donnée de référence 6, on fournit automatiquement au fournisseur du service en ligne 3 au moins une donnée complémentaire 7 de l'utilisateur 1, issue du fournisseur de données 2.

Ainsi, le fournisseur d'énergie 3 ne sollicite pas l'utilisateur 1 et peut tout de même vérifier de manière régulière que l'adresse de son domicile est toujours la même et obtenir le cas échéant un justificatif à jour, de manière en particulier à respecter une éventuelle obligation légale. Du côté de l'utilisateur, il lui suffit d'indiquer lors de la première transmission qu'il souhaite que ce procédé soit réalisé automatiquement pour ne pas être sollicité régulièrement. La plateforme 10 garde son rôle de tiers de confiance en ce qu'elle continue à reproduire la transmission de données sécurisées entre le fournisseur de données et le fournisseur de service, mais sans solliciter l'utilisateur 1 lorsque la donnée à vérifier reste identique à la donnée de référence. En d'autres termes, la plateforme « rejoue » la transaction sans nécessiter d'action de la part de l'utilisateur. Ce dernier n'est prévenu qu'en cas de non-identité entre la donnée à référence et la donnée à vérifier, de façon à ce qu'il puisse lui-même, s'il le souhaite, renseigner la donnée de référence à jour.

On peut noter que le programme d'ordinateur 20 comprend des instructions qui, lorsque le programme est exécuté par un ordinateur, conduisent celui-ci à mettre en oeuvre le procédé tel que décrit précédemment.

Par ailleurs, ce programme est installé sur le serveur 30 mais pourrait être contenu sur tout support de données lisibles par ordinateur, tel qu'un disque dur, une clé USB etc. Enfin, à la place du serveur 30 et de manière générale de tous les moyens mis en oeuvre, tout « dispositif de traitement de données » comprenant des moyens de mise en oeuvre du procédé tel que décrit précédemment est susceptible d'être impliqué dans la mise en oeuvre de l'invention.

L'invention n'est pas limitée aux modes de réalisation présentés et d'autres modes de réalisation apparaîtront clairement à l'homme du métier.

En particulier, l'exemple décrit et illustré porte sur une donnée complémentaire 7 que l'on peut qualifier de certifiante, en ce qu'elle va certifier l'identité entre la donnée à vérifier et la donnée de référence puisqu'elle indiquera dans l'exemple l'adresse du domicile. Cette donnée certifiante permet dans le même temps de certifier le caractère « à jour » de la donnée pertinente. Dans l'exemple, le justificatif de domicile certifie la validité de l'adresse à l'égard du fournisseur d'énergie, il est donc directement lié à cette donnée à vérifier, il en est une justification. Mais l'invention peut porter sur d'autres données complémentaires, qui n'auraient pas ce caractère certifiant. Ainsi, dans un autre mode de réalisation de l'invention, la donnée pertinente à vérifier de l'utilisateur comprend son nom et son numéro de contrat auprès du fournisseur d'énergie ou d'un autre type de fournisseur de service. Cette donnée est comparée à une donnée de référence auprès d'un fournisseur de données, comme dans le mode de réalisation présenté. En cas d'identité, la donnée complémentaire envoyée est l'adresse postale de l'utilisateur. Ainsi, il ne s'agit pas ici d'une donnée certifiante, ou d'une justification de l'identité, il s'agit d'une donnée de complément, qui vient éventuellement remplacer une ancienne adresse de l'utilisateur dans la base de données du fournisseur de service. En d'autres termes, le procédé permet dans ce second exemple de vérifier le caractère toujours correct d'une ou de plusieurs données pertinentes, et, en cas d'issue positive, de mettre à jour les données considérées comme complémentaires.

Par ailleurs, le procédé peut traiter toutes données et pas uniquement celles liées à un domicile. De manière générale, il est adapté à la vérification et à la mise à jour sécurisée de données personnelles d'un utilisateur, qui peuvent donc être d'ordre financier, médical, familiale, etc.

Concernant les types de données, leur prédéfinition dans les catégories « à vérifier/de référence » ou « complémentaire » dépend de l'usage du procédé de l'invention. Ainsi, si dans le premier exemple décrit en détails, l'adresse postale est une donnée à vérifier, cette adresse est une donnée complémentaire dans le deuxième mode de réalisation évoqué brièvement ci-dessus. C'est prédéfinition peut être réalisée manuellement et sur mesure en fonction de l'usage auquel est destiné l'invention.

Le jeton de mise à jour pourrait être conçu différemment et contenir d'autres éléments, en fonction de ce que l'homme du métier juge nécessaire. Concernant sa durée ou période de validité, elle peut être indéfinie, ce qui signifie que le procédé aura toujours lieu sans ordre contraire de la part de l'utilisateur ou d'une des autres parties.

Par ailleurs, l'homme du métier pourrait penser à se passer de jeton de mise à jour pour obtenir la donnée à vérifier. Ainsi, une manière plus simple mais moins sécurisée serait de stocker les données, au moins la donnée à vérifier, sur la plateforme. Il pourrait s'agir d'un hachage de cette donnée. Dans ce cas, le jeton de mise à jour ne serait pas nécessaire, les moyens ayant directement accès à la donnée à vérifier. La plateforme serait compatible avec un tel procédé. Cependant, l'un des avantages de cette plateforme et du procédé décrits est justement de pouvoir se passer de stockage des données, celles-ci ne faisant que transiter par la plateforme sans pouvoir y être modifiée.

### Liste de références

1 : utilisateur
2 : fournisseur de données
3 : fournisseur de service
4 : donnée pertinente de l'utilisateur du service
5 : donnée complémentaire associée à la donnée pertinente
6 : donnée de référence
7 : donnée complémentaire associée à la donnée de référence
8 : jeton de mise à jour
10 : plateforme numérique de transmission de données, de vérification et de mise à jour
11 : module d'accès à la donnée à vérifier
12 : module d'accès à la donnée de référence
13 : module de comparaison
14 : module d'envoi d'une donnée complémentaire
15 : module de chiffrement
16 : module de déchiffrement
17 : module de hachage
18 : module de conception d'un jeton de mise à jour
20 : programme d'ordinateur
21 : base de données associée au fournisseur de données
30 : serveur(s) associé(s) à la plateforme
31 : base de données associée au fournisseur de service

## Revendications

1. Procédé (100) de mise à jour de données personnelles d'un utilisateur (1) d'un service en ligne, entre au moins un fournisseur de données (2) et un fournisseur du service en ligne (3), dans lequel, au préalable, on fournit, au fournisseur du service en ligne, au moins une donnée pertinente (4) pour l'utilisateur du service en ligne, le procédé étant **caractérisé en ce que**, ultérieurement, on met en oeuvre les étapes suivantes :
- on accède, auprès du fournisseur du service en ligne (3), à la donnée pertinente (4) pour l'utilisateur (1) du service en ligne fournie préalablement ;
- on accède, auprès du fournisseur de données (2), à au moins une donnée de référence (6) de l'utilisateur (1) ;
- on compare la donnée pertinente (4) fournie préalablement à la donnée de référence (6) ;
- si la donnée pertinente (4) fournie préalablement est identique à la donnée de référence (6), on fournit automatiquement au fournisseur du service en ligne (3) au moins une donnée complémentaire (7) de l'utilisateur, issue du fournisseur de données (2).

2. Procédé (100) selon la revendication précédente, dans lequel la donnée pertinente (4) fournie préalablement au fournisseur du service en ligne (3) est une donnée à caractère personnel de l'utilisateur (1), telle qu'une adresse de domicile ou une donnée bancaire, la donnée complémentaire (7) étant une donnée de justification, telle qu'un justificatif de domicile ou un relevé d'identité bancaire, permettant de justifier la validité actuelle de la donnée pertinente (4) à caractère personnel fournie préalablement.

3. Procédé (100) selon l'une quelconque des revendications précédentes, dans lequel la donnée pertinente (4) fournie préalablement au fournisseur du service en ligne (3) est une donnée requise préalablement par le fournisseur du service en ligne lors d'une inscription de l'utilisateur (1) au service ou lors d'un premier usage du service par l'utilisateur.

4. Procédé (100) selon l'une quelconque des revendications précédentes, dans lequel la donnée complémentaire (7), fournie au fournisseur du service en ligne (3) à l'issue de la comparaison, remplace une donnée complémentaire antérieure (5).

5. Procédé (100) selon l'une quelconque des revendications précédentes, dans lequel la donnée complémentaire (7) est une donnée certifiante (7) certifiant, auprès du fournisseur du service en ligne, la constatation d'identité entre la donnée pertinente (4) fournie préalablement et la donnée de référence (6).

6. Procédé (100) selon l'une quelconque des revendications précédentes, dans lequel, pour comparer la donnée pertinente (4) à la donnée de référence (6), on compare un hachage de la donnée pertinente à un hachage de la donnée de référence.

7. Procédé (100) selon la revendication précédente, dans lequel, lors de l'étape de fourniture préalable de la donnée pertinente (4) au fournisseur du service en ligne (3), on fournit également le hachage de la donnée pertinente au fournisseur du service en ligne, et, lors de l'étape d'accession à la donnée pertinente auprès du fournisseur du service en ligne, on accède uniquement au hachage de la donnée pertinente.

8. Procédé (100) selon l'une quelconque des revendications précédentes, dans lequel, si la donnée pertinente (4) fournie préalablement et la donnée de référence (6) ne sont pas identiques, on transmet à l'utilisateur (1) une demande de mise à jour de la donnée à vérifier.

9. Procédé (100) selon l'une quelconque des revendications précédentes, dans lequel :
- au préalable des étapes de la revendication 1, parmi plusieurs données complémentaires (7) et plusieurs données de référence (6), on associe au moins l'une des données complémentaires (7) à au moins l'une des données de référence (6) ;
- si, à l'issue de la comparaison entre la donnée pertinente (4) fournie préalablement et au moins l'une des données de référence (6), la ou l'une de ces données de référence est identique à la donnée pertinente, la donnée complémentaire (7) fournie au fournisseur (3) du service en ligne est la ou au moins l'une des données complémentaires (7) associées au préalable à cette donnée de référence (6).

10. Procédé (100) selon l'une quelconque des revendications précédentes, comprenant les étapes suivantes :
- lors de l'étape de fourniture préalable de la donnée pertinente (4) au fournisseur du service en ligne, on fournit au fournisseur du service en ligne (3) au moins un jeton (8) de mise à jour chiffré, le jeton (8) étant tel qu'une fois déchiffré il permet d'accéder, auprès du fournisseur de données (2), à la donnée de référence (6) de l'utilisateur (1) ; puis
- pour réaliser l'étape d'accession à la donnée de référence (6) selon la revendication 1 :
• on récupère le jeton (8) de mise à jour chiffré auprès du fournisseur (3) du service en ligne, et, on déchiffre le jeton (8) indépendamment du fournisseur (3) du service en ligne ;
• on accède à la donnée de référence (6) de l'utilisateur (1), auprès du fournisseur de données (2), au moyen du jeton (8) déchiffré.

11. Procédé (100) selon la revendication précédente et au moins la revendication 6 prises ensemble, dans lequel :
- au préalable de l'étape de fourniture du jeton (8) de mise à jour chiffré au fournisseur du service en ligne (3) selon la revendication précédente, on conçoit le jeton (8) de mise à jour chiffré au moyen des étapes suivantes :
• on chiffre un identifiant du fournisseur de données (2) et un identifiant de l'utilisateur auprès du fournisseur de données ;
• on réalise le hachage de la donnée pertinente (4) de l'utilisateur (1) ;
• au sein d'un serveur web, on regroupe l'identifiant chiffré du fournisseur de données (2), l'identifiant chiffré de l'utilisateur auprès du fournisseur de données, et le hachage de la donnée pertinente (4) de l'utilisateur, de façon à former le jeton de mise à jour (8) comprenant les identifiants et le hachage ; et
• au sein du serveur web, on chiffre le jeton (8) de mise à jour ;
- pour réaliser l'étape d'accession à la donnée de référence (6) de l'utilisateur (1) selon la revendication précédente, on déchiffre, indépendamment du fournisseur (3) du service en ligne, le jeton de mise à jour et les identifiants ;
- on réalise le hachage de la donnée de référence (6) ;
- on réalise l'étape de comparaison de la revendication 6 entre le hachage de la donnée de référence (6) et le hachage de la donnée à vérifier (4).

12. Programme d'ordinateur (20) comprenant des instructions qui, lorsque le programme est exécuté par un ordinateur, conduisent celui-ci à mettre en oeuvre le procédé selon l'une quelconque des revendications 1 à 11.

13. Support de données lisibles par ordinateur, sur lequel est enregistré le programme d'ordinateur selon la revendication précédente.

14. Dispositif de traitement de données (30) comprenant des moyens de mise en oeuvre du procédé selon l'une quelconque des revendications 1 à 11.

15. Plateforme (10) de transmission sécurisée de données personnelles d'un utilisateur (1) d'un service en ligne, entre au moins un fournisseur de données (2) et un fournisseur (3) du service en ligne, **caractérisée en ce qu'**elle comprend :
- un module d'accès (11), auprès du fournisseur du service en ligne, à au moins une donnée pertinente (4) pour l'utilisateur du service en ligne fournie préalablement au fournisseur (3) du service en ligne
- un module d'accès (12) à au moins une donnée de référence (6) de l'utilisateur auprès du fournisseur de données ;
- un module de comparaison (13) entre la donnée pertinente (4) et la donnée de référence de manière à déterminer si elles sont identiques ;
- un module de fourniture (14) au fournisseur (3) du service en ligne d'au moins une donnée complémentaire (7) de l'utilisateur, issue du fournisseur de données (2).

## Patentansprüche

1. Verfahren (100) zur Aktualisierung von persönlichen Daten eines Nutzers (1) eines Online-Dienstes zwischen mindestens einem Datenanbieter (2) und einem Anbieter des Online-Dienstes (3), bei dem dem Anbieter des Online-Dienstes zuvor mindestens ein für den Nutzer des Online-Dienstes relevantes Datum (4) bereitgestellt wird, wobei das Verfahren **dadurch gekennzeichnet ist, dass** man späterhin die folgenden Schritte durchführt:
- Zugreifen auf die zuvor bereitgestellten, für den Nutzer (1) des Online-Dienstes relevanten Datums (4), beim Anbieter des Online-Dienstes (3);
- Zugreifen auf mindestens ein Referenzdatum (6) des Nutzers (1) vom Datenanbieter (2);
- Vergleichen des zuvor bereitgestellten relevanten Datums (4) mit dem Referenzdatum (6);
- wenn das zuvor bereitgestellte relevante Datum (4) mit dem Referenzdatum (6) identisch ist, automatisch Bereitstellen, mindestens eines zusätzlichen Datums (7) des Nutzers, das vom Datenanbieter (2) stammt, an den Anbieter des Online-Dienstes (3).

2. Verfahren (100) nach dem vorhergehenden Anspruch, bei dem das relevante Datum (4), das dem Anbieter des Online-Dienstes (3) zuvor bereitgestellt wurde, ein persönliches Datum des Nutzers (1) ist, wie etwa eine Wohnadresse oder Bankdaten, wobei das zusätzliche Datum (7) ein Nachweisdatum ist, wie etwa ein Wohnortnachweis oder ein Bankidentitätsauszug, mit dem die aktuelle Gültigkeit des zuvor bereitgestellten relevanten persönlichen Datums (4) belegt werden kann.

3. Verfahren (100) nach einem der vorhergehenden Ansprüche, wobei das relevante Datum (4), das dem Anbieter des Online-Dienstes (3) vorab zur Verfügung gestellt werden, ein Datum ist, das vorab vom Anbieter des Online-Dienstes bei einer Anmeldung des Nutzers (1) beim Dienst oder bei einer ersten Nutzung des Dienstes durch den Nutzer benötigt wird.

4. Verfahren (100) nach einem der vorhergehenden Ansprüche, wobei das zusätzliche Datum (7), das dem Anbieter des Online-Dienstes (3) nach dem Vergleich zur Verfügung gestellt wird, ein früheres zusätzliches Datum (5) ersetzen.

5. Verfahren (100) nach einem der vorhergehenden Ansprüche, wobei das zusätzliche Datum (7) ein zertifizierendes Datum (7) ist, das beim Anbieter des Online-Dienstes die Feststellung der Identität zwischen dem zuvor bereitgestellten relevanten Datum (4) und dem Referenzdatum (6) bescheinigen.

6. Verfahren (100) nach einem der vorhergehenden Ansprüche, wobei zum Vergleich des relevanten Datums (4) mit dem Referenzdatum (6) ein Hash des relevanten Datums mit einem Hash des Referenzdatums verglichen wird.

7. Verfahren (100) nach dem vorhergehenden Anspruch, wobei in dem Schritt des vorherigen Bereitstellens des relevanten Datums (4) an den Anbieter des Online-Dienstes (3) auch der Hash des relevanten Datums an den Anbieter des Online-Dienstes bereitgestellt wird, und in dem Schritt des Zugriffs auf das relevante Datum bei dem Anbieter des Online-Dienstes nur auf den Hash des relevanten Datums zugegriffen wird.

8. Verfahren (100) nach einem der vorhergehenden Ansprüche, wobei, wenn das zuvor bereitgestellte relevante Datum (4) und das Referenzdatum (6) nicht identisch sind, eine Anfrage zur Aktualisierung des zu überprüfenden Datums an den Nutzer (1) übermittelt wird.

9. Verfahren (100) nach einem der vorhergehenden Ansprüche, wobei:
- im Vorfeld der Schritte nach Anspruch 1 von mehreren zusätzlichen Daten (7) und mehreren Referenzdaten (6) mindestens eines der zusätzlichen Daten (7) mit mindestens einem der Referenzdaten (6) verknüpft wird;
- wenn nach dem Vergleich zwischen des zuvor bereitgestellten relevanten Datums (4) und mindestens einem der Referenzdaten (6) das oder eines dieser Referenzdaten mit dem relevanten Datum identisch ist, ist das dem Anbieter (3) des Online-Dienstes bereitgestellte zusätzliche Datum (7) das oder mindestens eines der zusätzlichen Daten (7), die zuvor mit diesem Referenzdatum (6) verknüpft wurden.

10. Verfahren (100) nach einem der vorhergehenden Ansprüche, umfassend die folgenden Schritte:
- beim Schritt des vorherigen Bereitstellens des relevanten Datums (4) an den Anbieter des Online-Dienstes (3), Bereitstellen mindestens eines verschlüsselten Aktualisierungs-Tokens (8), wobei das Token (8) so beschaffen ist, dass es nach seiner Entschlüsselung beim Datenanbieter (2) den Zugriff auf das Referenzdatum (6) des Nutzers (1) ermöglicht; und dann
- um den Schritt des Zugriffs auf das Referenzdatum (6) nach Anspruch 1 durchzuführen:
• Abrufen des verschlüsselten Aktualisierungs-Tokens (8) vom Anbieter (3) des Online-Dienstes, und Entschlüsseln des Tokens (8) unabhängig vom Anbieter (3) des Online-Dienstes;
• Zugreifen auf das Referenzdatum (6) des Nutzers (1) beim Datenanbieter (2) mithilfe des entschlüsselten Tokens (8).

11. Verfahren (100) nach dem vorhergehenden Anspruch und mindestens Anspruch 6 zusammengenommen, wobei:
- vor dem Schritt des Bereitstellens des verschlüsselten Aktualisierungs-Tokens (8) an den Anbieter des Online-Dienstes (3) nach dem vorhergehenden Anspruch das verschlüsselte Aktualisierungs-Token (8) durch die folgenden Schritte gestaltet wird:
• Verschlüsseln einer Kennung des Datenanbieters (2) und einer Kennung des Nutzers bei dem Datenanbieter;
• Durchführen des Hashings des relevanten Datums (4) des Nutzers (1);
• Zusammenfassen der verschlüsselten Kennung des Datenanbieters (2), der verschlüsselten Kennung des Nutzers beim Datenanbieter und des Hashs des relevanten Datums (4) des Nutzers innerhalb eines Webservers, so dass das Aktualisierungs-Token (8) gebildet wird, das die Kennungen und den Hash aufweist; und
• Verschlüsseln des Aktualisierungs-Token (8) innerhalb des Webservers;
- um den Schritt des Zugriffs auf das Referenzdatum (6) des Nutzers (1) nach dem vorhergehenden Anspruch durchzuführen, Entschlüsseln des Aktualisierungs-Token und der Kennungen unabhängig vom Anbieter (3) des Online-Dienstes;
- Durchführen des Hashings des Referenzdatums (6);
- Durchführen des Vergleichsschritts nach Anspruch 6 zwischen dem Hash des Referenzdatums (6) und dem Hash des zu überprüfenden Datums (4).

12. Computerprogramm (20) mit Anweisungen, die, wenn das Programm von einem Computer ausgeführt wird, diesen dazu veranlassen, das Verfahren nach einem der Ansprüche 1 bis 11 auszuführen.

13. Computerlesbarer Datenträger, auf dem das Computerprogramm nach dem vorhergehenden Anspruch gespeichert ist.

14. Datenverarbeitungsvorrichtung (30), die Mittel zur Durchführung des Verfahrens nach einem der Ansprüche 1 bis 11 aufweist.

15. Plattform (10) zur gesicherten Übertragung von persönlichen Daten eines Nutzers (1) eines Online-Dienstes zwischen mindestens einem Datenanbieter (2) und einem Anbieter (3) des Online-Dienstes, **dadurch gekennzeichnet, dass** sie aufweist:
- ein Modul (11) für den Zugriff auf mindestens ein für den Nutzer des Online-Dienstes relevantes Datum (4), das dem Anbieter (3) des Online-Dienstes zuvor bereitgestellt wurde, beim Anbieter des Online-Dienstes.
- ein Modul (12) für den Zugriff auf mindestens ein Referenzdatum (6) des Benutzers beim Datenanbieter;
- ein Modul (13) zum Vergleichen des relevanten Datums (4) mit dem Referenzdatum, um zu bestimmen, ob sie identisch sind;
- ein Modul (14), um dem Anbieter (3) des Online-Dienstes mindestens ein zusätzliches Datum (7) des Nutzers vom Datenanbieter (2) zu bereitzustellen.

## Claims

1. Method (100) for updating personal data of a user (1) of an online service, between at least one data supplier (2) and a supplier of the online service (3), wherein, beforehand, at least one item of data (4) relevant to the user of the online service is supplied to the supplier of the online service, the method being **characterized in that**, subsequently, the following steps are implemented:
- the item of data (4) relevant to the user (1) of the online service and supplied beforehand is accessed from the online service provider (3) ;
- at least one item of reference data (6) for the user (1) is accessed from the data provider (2); and
- the item of data (4) relevant to the user and supplied beforehand is compared with the reference data (6);
- if the item of data (4) relevant to the user and supplied beforehand is identical to the item of reference data (6), at least one additional data item (7) of the user, taken from the data supplier (2), is automatically supplied to the online service provider (3).

2. Method (100) according to the preceding claim, in which the item of data (4) relevant to the user and previously supplied to the supplier of the online service (3) is a personal data item of the user (1), such as a home address or a bank data item, the additional data item (7) being a justification data item, such as a proof of address or a bank identity statement, making it possible to justify the current validity of the personal item of data (4) relevant to the user and previously supplied.

3. Method (100) according to any one of the preceding claims, wherein the relevant data item (4) previously supplied to the supplier of the online service (3) is a data item previously required by the supplier of the online service when the user (1) registers for the service or when the user uses the service for the first time.

4. Method (100) according to any one of the preceding claims, wherein the additional data item (7), supplied to the supplier of the online service (3) at the end of the comparison, replaces a previous additional data item (5).

5. A method (100) according to any one of the preceding claims, wherein the complementary data item (7) is a certifying data item (7) certifying, to the supplier of the online service, the finding of identity between the relevant data item (4) supplied previously and the reference data item (6).

6. Method (100) according to any one of the preceding claims, wherein, in order to compare the relevant data item (4) with the reference data item (6), a hash of the relevant data item is compared with a hash of the reference data item.

7. A method (100) according to the preceding claim, wherein, during the step of previously supplying the relevant data (4) to the supplier of the online service (3), the hash of the relevant data is also supplied to the supplier of the online service, and, during the step of accessing the relevant data from the supplier of the online service, only the hash of the relevant data is accessed.

8. Method (100) according to any one of the preceding claims, wherein, if the relevant data item (4) supplied previously and the reference data item (6) are not identical, a request to update the data item to be verified is transmitted to the user (1).

9. Method (100) according to any one of the preceding claims, wherein :
- prior to the steps of claim 1, among a plurality of complementary data (7) and a plurality of reference data (6), at least one of the complementary data (7) is associated with at least one of the reference data (6) ;
- if, at the end of the comparison between the relevant data (4) previously supplied and at least one of the reference data (6), the or one of these reference data is identical to the relevant data, the complementary data (7) supplied to the supplier (3) of the online service is the or at least one of the complementary data (7) previously associated with this reference data (6).

10. Method (100) according to any one of the preceding claims, comprising the following steps:
- during the step of previously supplying the relevant data (4) to the supplier of the online service, at least one encrypted update token (8) is supplied to the supplier of the online service (3), the token (8) being such that, once decrypted, it makes it possible to access, from the data supplier (2), the reference data (6) of the user (1); then
- in order to perform the step of accessing the reference data (6) according to claim 1:
• the encrypted update token (8) is recovered from the online service provider (3), and the token (8) is decrypted independently of the online service provider (3);
• the reference data (6) of the user (1) is accessed from the data provider (2) by means of the decrypted token (8).

11. Method (100) according to the preceding claim and at least claim 6 taken together, wherein :
- prior to the step of supplying the encrypted update token (8) to the provider of the online service (3) according to the preceding claim, the encrypted update token (8) is designed by means of the following steps:
• encrypting an identifier of the data provider (2) and an identifier of the user with the data provider;
• the relevant data (4) of the user (1) is hashed;
• within a web server, the encrypted identifier of the data provider (2), the encrypted identifier of the user with the data provider, and the hash of the relevant data (4) of the user are grouped together, so as to form the update token (8) comprising the identifiers and the hash; and
• within the web server, the update token (8) is encrypted;
- in order to carry out the step of accessing the reference data (6) of the user (1) according to the preceding claim, the update token and the identifiers are decrypted independently of the online service provider (3);
- the reference data (6) is hashed;
- the comparison step of claim 6 is performed between the hash of the reference data (6) and the hash of the data to be verified (4).

12. Computer program (20) comprising instructions which, when the program is executed by a computer, cause the latter to implement the method according to any one of claims 1 to 11.

13. A computer-readable storage medium on which is recorded the computer program according to the preceding claim.

14. A data processing device (30) comprising means for implementing the method according to any one of claims 1 to 11.

15. Platform (10) for secure transmission of personal data of a user (1) of an online service, between at least one data supplier (2) and a supplier (3) of the online service, **characterised in that** it comprises :
- a module (11) for accessing, from the supplier of the online service, at least one item of data (4) relevant to the user of the online service and previously supplied to the supplier (3) of the online service ;
- a module (12) for accessing at least one piece of reference data (6) for the user from the data provider; and
- a module (13) for comparing the relevant data (4) and the reference data in order to determine whether they are identical; and
- a module (14) for supplying the supplier (3) of the online service with at least one additional item of user data (7) from the data supplier (2).
